Europäisches Patentamt

(19) European Patent Office

Office européen des brevets

(11) Numéro de publication: **0 059 676**
**B1**

(12) **FASCICULE DE BREVET EUROPEEN**

(45) Date de publication du fascicule du brevet:
**23.01.85**

(51) Int. Cl.⁴: **A 01 K  97/14, A 01 M  23/34**

(21) Numéro de dépôt: **82420029.9**

(22) Date de dépôt: **01.03.82**

(54) **Appareil destiné à enserrer, à capturer, notamment pour la pêche de gros poissons.**

(30) Priorité: **04.03.81 FR 8104899**
**01.02.82 FR 8201942**

(43) Date de publication de la demande:
**08.09.82 Bulletin 82/36**

(45) Mention de la délivrance du brevet:
**23.01.85 Bulletin 85/4**

(84) Etats contractants désignés:
**DE GB IT SE**

(56) Documents cités:
**DE - C - 817 223**
**FR - A - 988 722**
**GB - A - 432 752**
**GB - A - 452 448**
**GB - A - 891 814**
**GB - A - 898 384**
**US - A - 3 540 769**

(73) Titulaire: **S.A. VILDOR (société anonyme), 15 quai Gabriel Péri, F-83980 Le Lavandou (FR)**

(72) Inventeur: **Olivier, Jean, 15 quai Gabriel Péri, F-83980 Le Lavandou (FR)**

(74) Mandataire: **Dupuis, François, Cabinet Charras 3 Place de l'Hôtel-de-Ville, F-42000 St.Etienne (FR)**

BUNDESDRUCKEREI BERLIN

## Description

L'invention vise principalement, quoique non limitativement, la capture rationnelle et efficace des gros poissons et notamment des poissons de mer habituellement attrapés ou »ferrés« à la ligne, à partir d'embarcations.

Dans ce genre de pêche, qu'elle soit professionnelle ou sportive, lorsque le poisson, qui a mordu à l'hameçon, atteint une taille et un poids importants, il devient impossible de le hisser à bord manuellement, par relevage de la ligne, même avec l'aide d'une épuisette ou perche à filet. Le poisson doit être hissé au moyen d'une gaffe et quelquefois frappé en plusieurs endroits, ce qui altère la qualité de la prise qui présente des blessures et des parties déchiquetées.

On connait notamment les Brevets Américain US n° 3 540 769 et Anglais n° 891 814 et n° 432 752, qui montrent des dispositifs de capture comprenant un manche dans lequel sont logés des mécanismes commandés manuellement afin de resserrer autour d'un poisson, un lien souple développé en boucle au repos.

Ces dispositifs ne sont pas efficaces du fait, notamment, que le lien souple n'est pas tenu pendant que l'utilisateur essaie de le passer autour du poisson; on comprend donc que les conditions d'utilisation (bateau soumis aux éléments, vagues, chocs, débattements du poisson . . .) ne permettent pas à la boucle de demeurer développée convenablement.

Le dispositif selon l'invention remédie à ces inconvénients et permet en particulier de hisser rapidement et efficacement à bord des bateaux, les gros poissons capturés, sans danger pour les pêcheurs et sans nuire à la qualité, l'intégralité et à la présentation des prises.

Selon une caractéristique, cet appareil présente une ceinture robuste et rigide pour permettre de l'engager autour du volume ou partie à enserrer, tel que la queue ou le rostre d'un poisson, ladite ceinture étant solidaire d'un manche de préhension comportant intérieurement des moyens de liaison, de retenue, de traction et de libération, agissant sur un lien souple dont le développement en position de non utilisation de l'appareil forme une boucle qui est maintenue, d'une manière libérable, du côté intérieur et contre la ceinture rigide, un moyen de commande que l'on peut actionner depuis l'extrémité du manche ou près de cette extrémité, permettant le déclenchement des moyens précités afin de tirer le lien souple à l'intérieur ou le long du manche, en libérant la boucle de la ceinture qui la maintient, de façon à enserrer la queue ou autre partie du poisson, corps ou volume à enserrer.

Ces caractéristiques et d'autres encore ressortiront de la description qui suit.

Pour fixer l'objet de l'invention, sans toutefois le limiter, dans le dessins annexés:

La figure 1 est une vue en coupe longitudinale montrant l'appareil selon l'invention représenté en position armé.

La figure 2 est une vue en coupe suivant la ligne 2-2 de la figure 1.

La figure 3 est une vue en coupe suivant la ligne 3-3 la figure 1.

La figure 4 est une vue en coupe suivant la ligne 4-4 de la figure 1.

La figure 5 est une vue en coupe suivant la ligne 5-5 de la figure 1.

La figure 6 est une vue semblable à la figure 1, illustrant l'appareil en position de serrage autour de l'objet saisi.

La figure 7 est une vue partielle en coupe montrant les moyens de retenue et de détente du lien souple dans la position de serrage.

La figure 8 est une vue partielle illustrant une variante de réalisation des moyens de retenue du lien souple, représentés par deux demi-coupes en position armés et en position de serrage.

La figure 9 est une vue en coupe semblable à la figure 6, illustrant l'appareil armé, selon une variante de réalisation, avec en traits interrompus, la position de serrage.

La figure 10 est une vue partielle en coupe montrant le détail des moyens de commande du lien souple.

La figure 11 est une vue en coupe suivant la ligne 11-11 de la figure 10.

Les figures 12 et 13 sont des vues en perspective illustrant la manière de saisir un gros poisson, avec l'appareil selon l'invention.

La figure 14 est une vue partielle et en coupe montrant la partie avant, du côté de la ceinture rigide, de l'appareil suivant une autre réalisation.

La figure 15 est une vue en coupe montrant la partie arrière de l'appareil représenté figure 14.

La figure 16 est une vue en coupe suivant la ligne 16-16 de la figure 14.

La figure 17 est une vue en coupe suivant la ligne 17-17 de la figure 14.

La figure 18 est une vue partielle et en coupe suivant la ligne 18-18 de la figure 14.

La figure 19 est une vue en coupe suivant la ligne 19-19 de la figure 15.

La figure 20 est une vue partielle en perspective illustrant le montage amovible de la ceinture rigide sur le manche.

La figure 21 est une vue d'une réalisation d'une poignée de levage amovible.

La figure 22 est une vue en coupe très schématique de l'appareil selon la figure 14, en position armé.

La figure 23 est une vue semblable à la figure 22 mais l'appareil est en position de serrage de l'objet coiffé par la ceinture rigide.

La figure 24 est une vue partielle et en coupe montrant les mécanismes de commande en position de serrage, comme illustré figure 23.

Selon l'invention, cet appareil comprend une ceinture rigide 1 destinée à être engagée avec un large jeu, autour de la queue ou autres parties d'un poisson ou volume, et à maintenir en position opérationnelle, prêt à serrer, un lien souple 2 constituant le moyen qui permet d'enserrer. Le lien souple forme une boucle qui doit être maintenue du côté intérieur et contre la ceinture rigide 1.

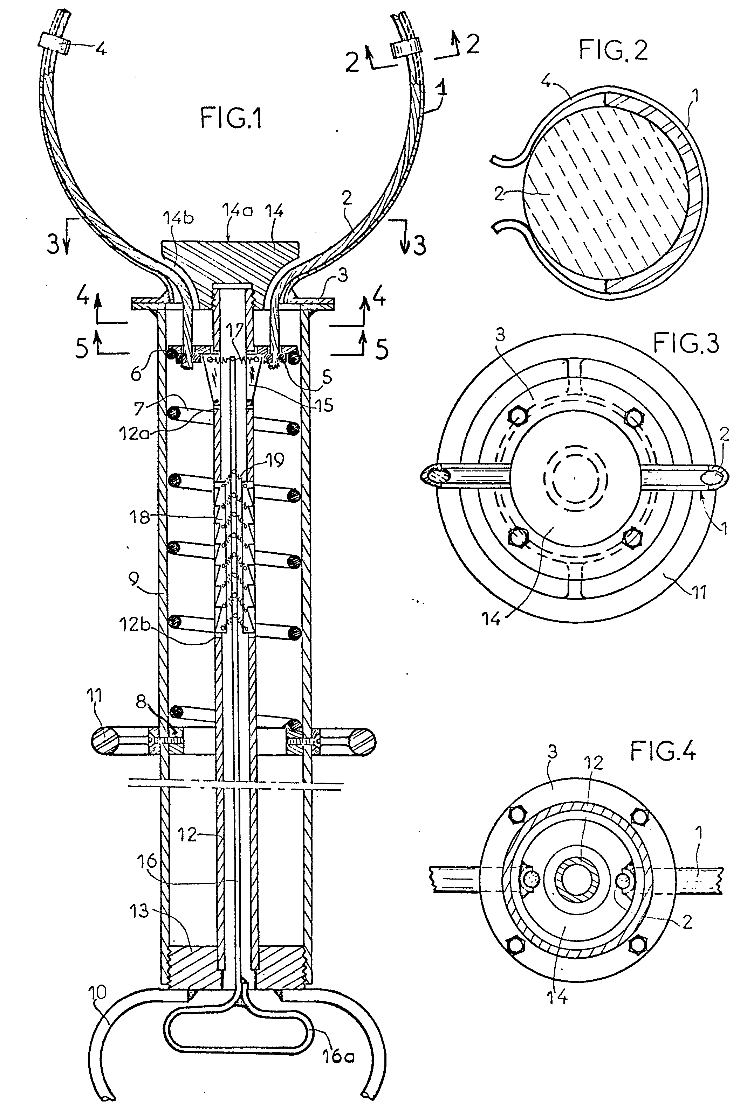

La ceinture rigide 1 est formée à partir d'un profilé en métal ou autre matière, ayant une section creuse et demi-circulaire, par exemple (figure 2). La ceinture a une forme générale circulaire, non limitative, et elle est raccordée à une bride circulaire 3. Le lien souple 2 qui peut être de toute nature et notamment un cordage du genre drisse, est logé en partie dans la ceinture où il y est retenu de manière aisément libérable, par des pinces ou clips 4 (figure 2), judicieusement répartis.

Les extrémités du lien souple 2 passent au-travers de la bride 3 et sont attachées par des colliers 5, à une rondelle 6 constituant la tête mobile sur laquelle est fixée l'extrémité d'un ressort à boudins 7 rendu solidaire, du côté opposé, d'un organe fixe 8. Ce dernier est monté dans un tube 9 relié de manière démontable, à la bride 3 et dont la longueur est suffisante pour constituer un manche de préhension, compte tenu des usages prévus.

Dans la réalisation illustrée, l'appareil est destiné à enserrer et à maintenir de gros poissons pris à l'aide de cannes à pêche ou autres moyens, que l'on amène près d'une embarcation. La longueur du manche est choisie pour permettre à un pêcheur se tenant dans l'embarcation, de passer la ceinture 1 de l'appareil, autour de la queue ou autre partie du poisson se débattant près de la surface de l'eau, en tenant l'appareil par sa partie arrière formant poignée de préhension 10.

Le manche tubulaire 9 présente encore en un point de sa longueur, généralement plus près de la ceinture que de la poignée, un organe tel une boucle, un anneau ou un volant 11, dans lequel on peut passer un crochet relié à un moyen de levage, afin de faciliter le déplacement d'un poisson ou corps lourd enserré au moyen de l'appareil.

D'une manière particulièrement avantageuse, on peut combiner l'organe 11 avec l'organe fixe 8 d'attache du ressort 7, comme illustré figure 1, où l'organe fixe 8 est une bague reliée par vis à l'anneau 11.

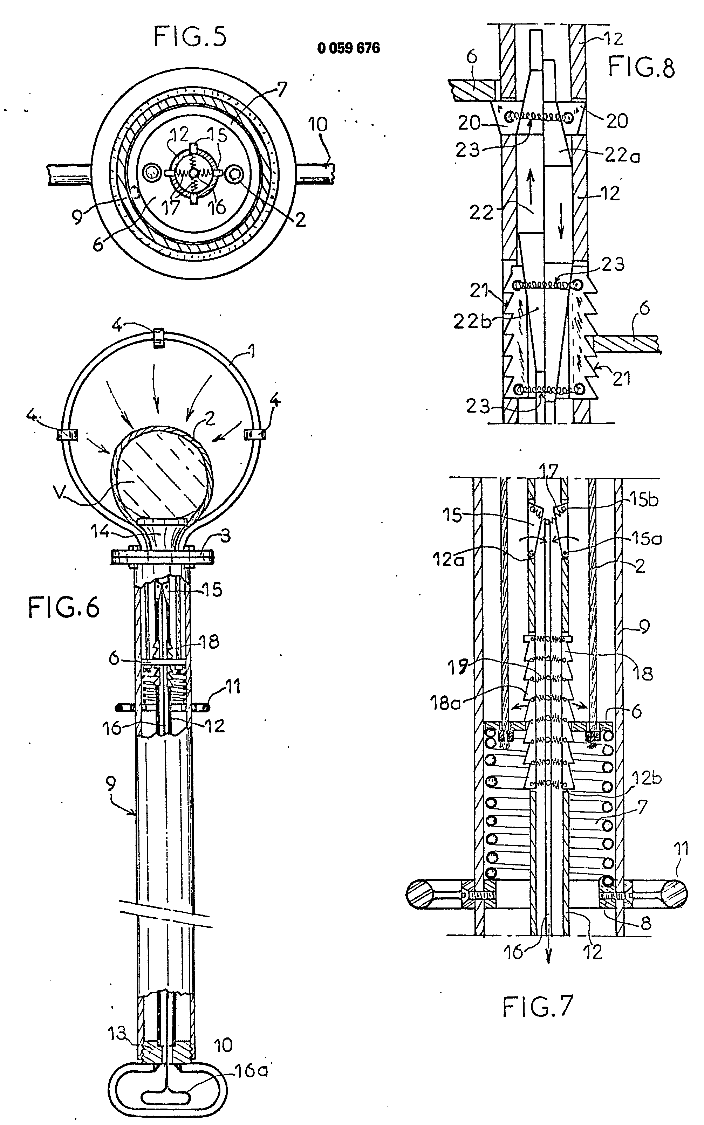

Lorsque le ressort 7 est au repos, compte tenu de la position de l'organe fixe 8 dans le manche, le lien souple 2 est dégagé de la ceinture et la boucle qu'il forme est en grande partie logée dans le manche (figure 6). Pour armer l'appareil, il suffit de tirer sur la boucle, jusqu'à ce que la tête mobile 6 du ressort soit verrouillée à proximité de la partie de liaison entre le tube 9 et la ceinture 1. Dans cette position, le lien souple 2 peut être engagé dans le profil creux de la ceinture et être retenu par les pinces 4.

Lorsque la ceinture 1 a été placée en position autour d'un volume à enserrer, l'utilisateur agit sur un organe de commande situé près de la poignée ou extrémité du manche, qui annule l'effet de verrouillage de la tête mobile 6 et autorise donc la brusque détente du ressort 7 lequel tire le lien souple qui enserre le poisson ou volume. La tête mobile 6 s'arrête lorsque le lien souple est serré autour du volume. A cet instant, l'effet combiné de traction du ressort et du poids en suspension du volume saisi, peut suffire à emprisonner ledit volume, mais il est prévu d'assurer le blocage ferme de la prise, par un moyen escamotable intégré dans le manche et qui est destiné à empêcher le retour en arrière de la tête donc le relâchement du lien souple qui doit coincer la prise contre la partie de liaison de la ceinture avec le manche.

Pour autoriser ces manoeuvres de verrouillage de la tête 6 en position d'armement et de serrage, on voit aux figures 1, 3, 5, 6 et 7, une première réalisation dans laquelle le manche 9 reçoit intérieurement, un tube 12 centré par exemple, en appui dans un bouchon 13 solidaire de la poignée de préhension 10 et vissé dans le manche.

A l'autre extrémité du tube 12, est vissée ou autrement fixée, une forme profilée 14 dont la face supérieure 14a est destinée à servir de butée au volume enserré, tandis que la périphérie 14b est conformée pour s'engager entre les deux brins du lien souple 2, en délimitant ainsi, par rapport au profil de raccordement de la ceinture, des espaces de guidage desdits brins.

Le tube 12 présente près de son extrémité de liaison avec la forme 4, des ouvertures latérales 12a et dans la majeure partie de la course de déplacement de la tête mobile 6, d'autres ouvertures latérales 12b, de plus grande longueur que les ouvertures 2a. Dans les ouvertures 12a on monte à articulation, par leur extrémité inférieure 15a, des cliquets 15 commandés pour s'écarter radialement en saillie du tube 12 ou être escamotés dans ledit tube, par une tige axiale 16 et des biellettes élastiques 17 attachées aux extrémités supérieures 15b des cliquets 15 et à la tige 16. Dans les ouvertures 12b sont également placées des barrettes 18 à crans orientés 18a, qui sont reliées par des biellettes élastiques 19 à la tige 16, pour placer les crans de barrettes, soit en saillie du tube 12, soit en position escamotée.

La tige 16 est convenablement guidée dans le tube 12 et traverse le bouchon inférieur 13 pour se terminer par une poignée de préhension 16a, intérieure à la poignée 10.

L'armement de l'appareil s'opère en plaçant la tige 16 en position haute dans le tube 12, ce qui a pour effet, compte tenu des montages des cliquets 15 et des barrettes 18, de permettre simultanément, la saillie desdits cliquets 15 et l'escamotage des barrettes 18. On tire alors le lien souple 2 pour le loger dans la ceinture 1, lorsque la tête mobile 6 a passé les cliquets 15 sur lesquels elle est retenue par écartement radial élastique (figure 1).

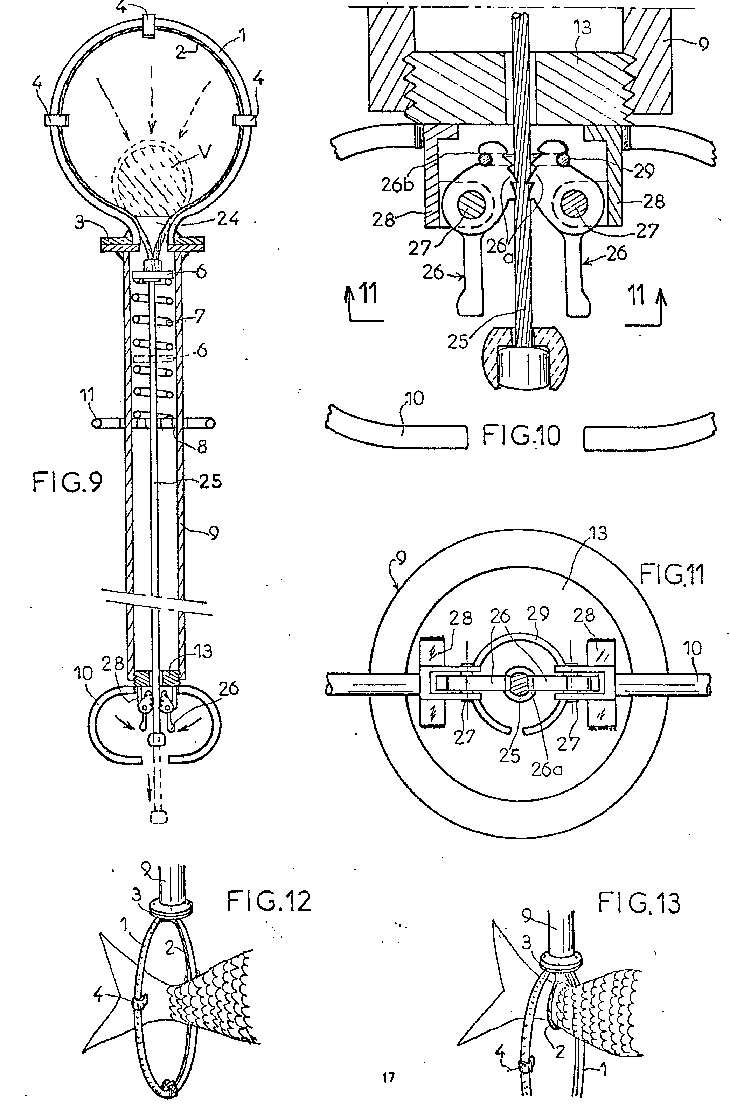

Lorsque l'on tire à soi la poignée 16a, après avoir passé la ceinture 1 à travers le volume V à saisir (figures 6 et 12), les cliquets 15 sont escamotés dans le tube 12 et la tête 6 soumise à l'action de traction du ressort 7, descend brutalement le long du tube 12 en entraînant le lien souple qui se referme autour du volume coincé contre la forme 14, comme illustré figures 6 et 13. La tête mobile 6 passe alors sur les crans 18a des barrettes 18 qui se déplacent élastiquement. Lorsque le volume est enserré, la tête mobile 6 s'arrête et se bloque contre les crans 18a des barrettes, en étant ainsi verrouillée de manière sûre (figure 7).

Suivant une autre forme de réalisation illustrée figure 8, les cliquets 20 de retenue de la tête mobile 6 et les barrettes crantées 21, sont établis avec des faces intérieures pentées pour être déplacés alternativement en saillie du tube 12, par des parties coniques inversées 22a, 22b, exécutées sur une tige 22 coulissant dans le tube 12 et reliées à une poignée de préhension semblable à celle de la tige 16; les cliquets 20 et les barrettes 21 étant rappelés élastiquement par un ou des ressorts en spirale 23 traversant ces pièces et formant des tores.

Suivant la réalisation illustrée aux figures 9, 10 et 11, les cliquets et les barrettes profilées de retenue de la tête mobile 6 dans les deux positions, sont avantageusement remplacés par un dispositif unique que l'on décrit ci-après.

Le lien souple 2 est toujours attaché par ses extrémités, à la tête mobile 6 qui est reliée à l'organe 8 par le ressort de traction 7. La ceinture 1 est fixée de manière démontable, à l'extrémité du manche 9, par la bride 3 elle-même solidaire d'une forme 24 disposée à l'intérieur des profils de raccordement de la ceinture, pour guider les brins du lien souple et servir d'appui en butée au volume enserré.

Entre la tête mobile 6 et l'extrémité du manche 9 fermée par le bouchon 3 solidaire de la poignée 10, est placée une tige 25, de préférence rigide, qui passe au travers du bouchon 13, puis entre les dentures orientées 26a de deux leviers-cames 26 articulés en 27 sur des chapes 28 solidaires du bouchon 13, comme on le voit mieux aux figures 10 et 11. Les leviers-cames 26 sont rappelés l'un contre l'autre, par un organe élastique tel que ressort en épingle, ressort spiral, sur l'axe 27, ou encore anneau élastique 29 engagé dans des cavités 26b des leviers-cames, comme illustré.

On comprend que lorsque l'appareil est armé (traits interrompus, figure 9), c'est-à-dire que l'on a tiré manuellement la boucle du lien souple 2 pour l'engager dans la ceinture, cela en bandant le ressort 7, puis lorsque l'on a relâché l'action de traction, les dentures 26a des leviers-cames qui, par leur orientation avaient permis le glissement de la tige 25 entre elles, lors de la traction (par écartement élastique desdits leviers-cames), s'appliquent fortement contre la tige 25 en l'empêchant de glisser sous la traction du ressort 7. A cet effet, on peut augmenter l'effort de pression par enrobage de la tige avec une surface souple.

Lorsque la ceinture 1 a été passée autour du volume que l'on veut enserrer, une légère action manuelle sur les leviers 26, illustrée par les flèches, figure 9, libère la tige 25 et donc le ressort 7 qui se rétracte brutalement en entraînant le lien souple 2, comme illustré en traits interrompus à la figure 9.

La ceinture 1 peut être de section rectangulaire, carrée ou autre, ou à profil creux plus profond, pour loger entièrement le lien souple. La forme générale de la ceinture peut être carrée, ovale, hexagonale... La partie non active du manche 9 peut être télescopique. Le lien souple 2 peut être simplement plaqué contre une ceinture 1 pleine, et retenu par les pinces ou clips.

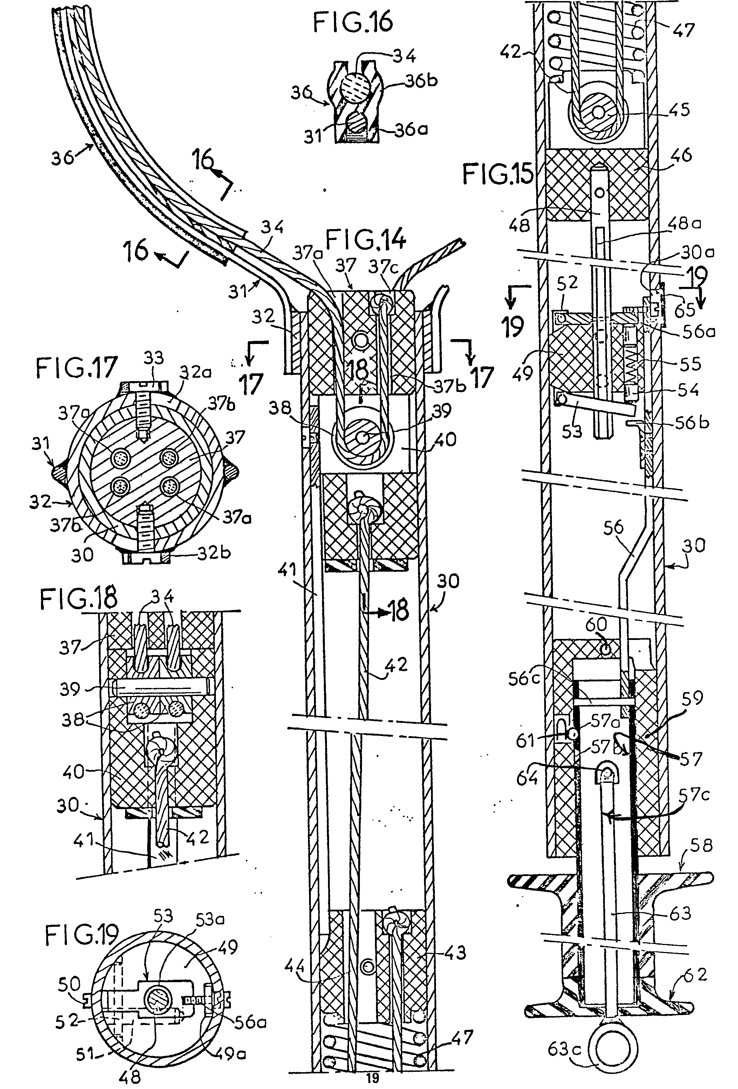

Dans une autre réalisation, l'appareil illustré figures 14—15, présente un manche de préhension tubulaire 30, dont une extrémité reçoit de manière démontable, une ceinture rigide 31 qui est formée d'un profilé métallique ou autre matériau léger tel que matière plastique, bois...

La ceinture 21 peut avoir toute forme polygonale ou en courbe fermée et présenter une section quelconque. Dans l'exemple illustré, la ceinture est constituée d'un fil à section ronde formant un cercle dans le plan et au-dessus ou dans le prolongement du manche auquel elle se raccorde par une bague ou manchon 32 à montage baïonnette.

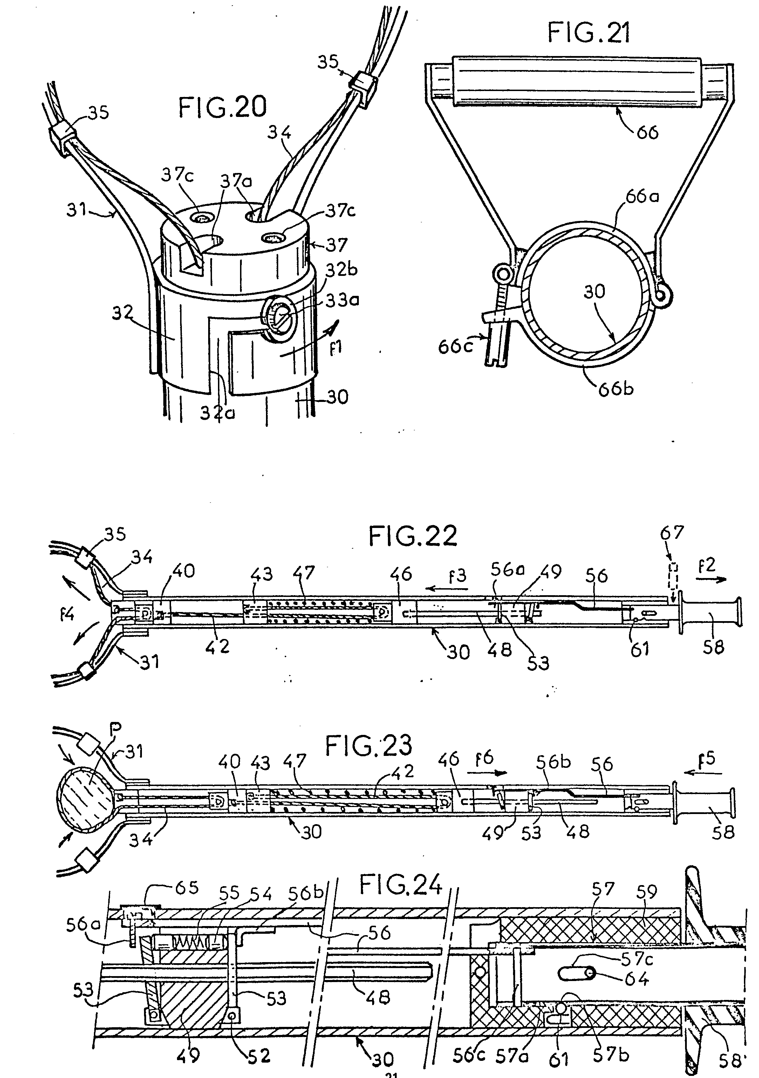

A cet effet, le manchon 32 présente en deux points diamétralement opposés, une entaille équerrée 32a terminée par un oeilleton 32b destiné à l'appui de la tête 33a d'une vis 33 de verrouillage du manchon (figures 17 et 20).

On comprend que l'on engage le manchon sur le manche, par ses entailles 32a passant autour des vis 33, puis que l'on verrouille le manchon sur le manche, par rotation du manchon (flèche f1, figure 20) et par serrage des vis 33.

Selon la figure 20, le lien souple d'enserrage 34 est retenu temporairement à l'intérieur et contre la ceinture rigide par des clips ou cavaliers 35 régulièrement répartis sur la circonférence de la ceinture.

Dans une autre réalisation illustrée aux figures 14 et 16, le lien souple d'enserrage 34 est retenu temporairement à l'intérieur et contre la ceinture rigide, par engagement dans un profilé 36 en caoutchouc par exemple, comprenant une partie 36a d'adaptation sur la ceinture 31 et une cavité ouverte et à capacité élastique 36b, pour le logement au moins partiel du lien souple.

Les deux brins du lien souple 34 formant une boucle accolée intérieurement à la ceinture, pénètrent dans le manche en traversant des orifices 37a exécutés en deux points diamétralement opposés, dans un manchon 37 que est fixé intérieurement à l'extrémité du manche, par l'intermédiaire des vis 33 de verrouillage de la ceinture.

Après avoir traversé le manchon 37, les brins du lien souple s'enroulent sur des poulies accolées 38, qui sont axées en 39 sur un premier coulisseau 40 dont le déplacement dans le manche peut être guidé et indexé en rotation par une barrette 41 coppérant avec une rainure du coulisseau (figures 14 et 18). Les deux brins traversent ensuite le manchon fixe 37, par deux autres orifices 37b semblables aux orifices 37a, puis les extrémités sont nouées ou autrement agencées pour former des renflements et se loger dans des chambres 37c du manchon, figure 14.

Le coulisseau 40 est traversé à sa partie arrière par un câble 42 ou autre lien souple ou semi-rigide, qui y est attaché de la même manière que le lien 34.

Le lien 42 s'étend dans le manche 30 et traverse d'une manière désaxée, un fourreau 43 fixé par vis 44, puis s'enroule sur une poulie 45 portée à rotation libre par un deuxième coulisseau 46, avant de retraverser le fourreau 43 pour s'y attacher comme précédemment (figures 14 et 15). On constitue ainsi un dispositif de mouflage à deux niveaux, à savoir: mouflage des brins du lien souple 34 et mouflage du lien 42.

Entre le fourreau 43 et le deuxième coulisseau 46 est interposé un ressort à boudins 47 qui est fortement comprimé lorsque le premier coulisseau est appliqué contre la manchon 37, comme le montre la figure 14.

A noter que la combinaison du mouflage des brins du lien souple 34 avec les caractéristiques du ressort à boudins 47, permet de faire varier dans une large plage, le diamètre ou périmètre de la ceinture rigide 31, sans modifier les autres caractéristiques de l'appareil.

Le deuxième coulisseau 46 porte à l'arrière, une tige rigide 48 qui est guidée à coulissement par passage dans une pièce 49 fixée par vis 50, dans le manche. A noter que l'indexation angulaire du deuxième coulisseau est obtenue par un méplat 48a de la tige rigide, coopérant avec une goupille 51 de la pièce 49 de guidage (traits interrompus, figure 19).

A l'avant et à l'arrière de la pièce de guidage sont articulés en 52, des taquets-coinceurs 53 dont l'orifice 53a est traversé par la tige 48 et qui s'appuient à leur extrémité opposée à l'articulation, contre des pistons 54 coulissant dans la pièce de guidage et qui sont séparés par un ressort d'écartement 55.

Une tringle déportée 56 traverse la pièce 49 par une rainure 49a et porte en deux points distants, des saillies ou butées 56a—56b destinées à venir en appui alternativement, contre l'un ou l'autre des taquets-coinceurs (figure 15), suivant la position de la tringle que est reliée à l'arrière, en 56c, au moyeu 57 d'une poignée de commande 58.

Le manche 30 reçoit à l'extrémité arrière, un manchon creux 59 qui y est fixé par vis 60. Dans ce manchon peut coulisser le moyeu 57 entre deux positions marquées par des empreintes ou crans 57a—57b coopérant avec une bille à ressort 61.

De préférence et comme illustré, la poignée 58 présente à l'arrière, un bouchon 62 à lèvre souple pour se refermer contre une tige 63 traversant le moyeu 57. Cette tige est axée en 64 sur le manche et déborde à l'arrière par un anneau 63a destiné à coopérer avec tous moyens de levage ou d'attache tels que crochets, élingues ... reliés à un élément du bateau. A noter que le moyeu 57 de la poignée peut coulisser par rapport à l'axe 64, par une lumière 57c illustrée en traits interrompus à la figure 15.

On voit encore figure 15, que l'ouverture 30a réalisée dans le manche pour le montage de la butée 56a d'un taquet-coinceur, est obturée par un capuchon 65.

A la figure 21 on a illustré une poignée de transport et de levage 66 présentant un collier en deux parties articulées 66a—66b, pour être montée de manière réglable et amovible sur le manche 30, sur lequel elle peut être serrée par tous systèmes de blocage du type boulon à oeil 66c ou similaire. On décrit maintenant le fonctionnement de l'appareil en se référant aux figures 14, 15, 22, 23 et 24 des dessins.

Pour armer l'appareil, on tire (selon flèche f2, figure 22) la poignée 58, ce qui a pour effet de déplacer la tringle 56 dont la butée 56a ramène le taquet-coinceur avant 53 dans une position perpendiculaire à la tige rigide 48, tandis que le taquet-coinceur arrière bascule sous la poussée du piston arrière 54, selon figures 15 et 22, afin de permettre le coulissement de la tige rigide 48 dans le sens de la flèche f3.

Dans cette position, on peut saisir la boucle résiduelle du lien souple 34 et la tirer (flèche f4), pour engager le lien souple dans les moyens de retenue temporaire 35 ou 36 solidaires de la ceinture rigide 31. Dans cette action, on a amené le premier coulisseau 40 contre le manchon 37 et comprimé le ressort 47 par retour du deuxième coulisseau 46 à sa position initiale.

Lorsque l'on relâche l'action de traction sur le lien souple 34, le taquet-coinceur arrière 53 qui était redressé par le coulissement de la tige 48, bascule naturellement pour bloquer ladite tige et maintenir ainsi l'appareil en position armé.

A noter qu'une sécurité peut être prévue en cas de manipulation inopinée de la poignée 58, par exemple, sous forme d'une bague fendue 67 en matériau à capacité élastique, qui peut être insérée entre la face avant de la poignée et l'extrémité du manche (traits interrompus, figure 22). Contre les chocs ou manipulations de l'appareil par appui sur l'extrémité de la poignée, on remarque que la sécurité est obtenue par l'anneau 63a qui est monté indépentamment de la poignée.

Lorsque la ceinture rigide 31 de l'appareil, a été engagée autour de la prise P, par exemple la queue du poisson, il suffit d'agir sur la poignée 58 selon la flèche f5, figure 10, jusqu'à ce que le cran arrière 57b de son moyeu coopère avec la bille à ressort 61. Dans cette action, la tringle 56 est déplacée de la même valeur, ce qui assure simultanément le redressement du taquet-coinceur arrière par la butée arrière 56b et le basculement du taquet-coinceur avant, dégagé de la sutée avant 56a.

De ce fait, la tige rigide 48 est libérée et le ressort à boudins 47 se détend en poussant le deuxième coulisseau 46 dans le sens de la flèche f6. Le lien 42 tire le premier coulisseau 40, donc le lien souple 34 qui se sépare des moyens de retenue de la ceinture rigide et vient enserrer la prise P.

A noter que le lien souple 34 est maintenu dans la position d'enserrage, du fait que le taquet-coinceur avant 53 bloque la tige rigide 48 dans sa position arrière.

Bien entendu, les éléments de l'appareil peuvent être réalisés en tous matériaux et notamment en matière plastique ou autres matériaux légers.

Les aventages ressortent bien de la description, on souligne en outre:

— les nombreuses applications possibles: capture, sauvetage, manipulation à distance . . .
— l préhension rapide et sûre de corps et de volumes divers, notamment la queue ou rostre des poissons.
— Lorsqu'il s'agit de capturer les gros poissons, pour les hisser à bord d'une embarcation par exemple, on comprend que l'on peut, grâce à l'appareil, éviter l'emploi d'une gaffe, ce qui permet en conséquence, de présenter un poisson net de toute blessure, avec tout son poids, cela avec facilité, si l'on considère qu'un gros poisson maintenu par la queue ne peut se débattre et sauter.
— Dans certains cas, notamment pour les grosses prises, on peut soulever le poisson enserré par l'appareil, avec un crochet de levage ou en utilisant un second appareil saisissant le poisson par la tête ou le rostre.

**Revendications**

1. Appareil destiné à enserrer, à capturer, notamment pour la pêche de gros poissons, du type comprenant un manche ou perche (9, 30) dans lequel sont logés des mécanismes (7 et 15—19 ou 20—23 ou 25—29; 47 et 40—58) commandés manuellement à partir du manche (9, 30) ou extrémité de préhension (10) du manche, afin de resserrer autour du poisson ou autre corps ou volume à saisir, une boucle développée au repos, à l'autre extrémité du manche; ladite boucle étant formée par un câble ou autre lien souple (2, 34) relié aux mécanismes de commande et tiré lors du déclenchement de ces mécanismes à l'intérieur du manche; l'appareil étant caractérisé en ce que ladite boucle du lien souple (2, 34) est maintenue de manière libérable du côté intérieur, dans le plan et contre une ceinture robuste et rigide (1, 31) solidaire de ladite autre extrémité du manche et disposée dans un plan centenant l'asee du manche, la dimension intérieure de ladite ceinture permettant de l'engager autour du poisson ou autre volume ou corps à saisir; l'action manuelle de commande à l'extrémité de préhension (10), provoquant le déclenchement des mécanismes intérieurs qui tirent le lien souple (2, 34) à l'intérieur du manche (9), libérant la boucle de la ceinture (1, 31) qui la maintenait et la refermant à l'intérieur et dans le plan de la surface délimitee par cette ceinture (1), ladite boucle étant serrée et maintenue serrée autour du corps ou volume à saisir jusqu'à qu'on le libère par une action différente sur la commande.

2. Appareil selon 1, caractérisé par le fait que les moyens de liaison du lien souple (34) avec le manche (30) et les moyens de traction dudit lien à l'intérieur du manche, sont constitués par un mouflage à deux niveaux, c'est-à-dire un dispositif de mouflage des brins ou extrémites du lien souple (34) sur une partie fixe du manche (30) après être passées sur un élément mobile (40) faisant partie d'un dispositif de mouflage (40—46) pour un autre lien (42) soumis à l'action de traction d'un organe élastique (47) commandé depuis l'organe (58) situé à l'extrémité du manche, par l'intermédiaire d'une transmission (48) reliée à un dispositif de retenue et de libération (52—56) agissant sur le deuxième mouflage.

3. Appareil selon 1, caractérisé par le fait que la ceinture (1, 31) rigide a une forme générale circulaire ou polygonale et un profil en section creux, de préférence avec fond demi-circulaire pour recevoir dans son plan et entièrement ou en partie, le lien souple (2, 34) qui y est retenu par des organes élastiques du type pinces, clips, cavaliers (4, 36).

4. Appareil selon 1 et 3, caractérisé par le fait que les parties de raccordement (3) du profil interne de la ceinture (1) avec le manche (9) sont conformées pour guider les brins du lien souple (2), à l'intérieur du manche, pour leur fixation sur un moyen de liaison (6) avec les mécanismes de commande, qui peuvent déplacer sous l'action d'un ressort (7) ce moyen de liaison à l'intérieur du manche.

5. Appareil selon 1 et 4, caractérisé par le fait que le ressort (7) est fixé à ses extrémités, sur le moyen de liaison (6) et sur un organe (8) fixé dans le manche (9); ledit organe (8) servant également de support de fixation pour un anneau, volant ou autre moyen de levage (11) disposé à l'extérieur du manche.

6. Appareil selon 1 et 4, caractérisé par le fait que le moyen de liaison (6) ets retenu en position armé par des cliquets (15) articulés à une extrémité, sur un tube (12) positionné fixe à l'intérieur du manche (9) entre une forme d'appui (14) du volume à enserrer et un bouchon (13) vissé à l'extrémité de préhension (10) du manche (9).

7. Appareil selon 1 et 6, caractérisé par le fait que le moyen de liaison (6) est retenu, en position d'enserrage du volume saisi, par des barrettes (18) équipées de multiples crans orientés (18a) et logées dans le tube (12), de manière à s'escamoter dans ledit tube ou à faire saillie radialement.

8. Appareil selon 6 et 7, caractérisé par le fait que les cliquets (15) et les barrettes (18) sont commandées par des biellettes élastiques (19) reliées à une tige axiale (16) mobile le long et dans le tube (12) et présentant au niveau de la partie de préhension (10) du manche, une poignée de manoeuvre (16a) assurant simultanément, par déplacement longitudinal, soit l'escamotage des cliquets (15) libérant la tête mobile (6) et la saillie des barrettes (18) empêchant le retour en arrière de la tête (6), après enserrage du volume, soit inversement, la saillie des cliquets (15) et l'escamotage des barrettes (18).

9. Appareil selon 6 et 7, caractérisé par le fait que les cliquets (20) et les barrettes crantées (21) logés librement dans le tube (12), sont reliés entre eux par des ressorts en spirale torique (23) et commandés dans leur déplacement radiaux inversés (escamotage dans le tube ou saillie hors du tube), par des portées coniques inversées (22a, 22b) formées sur une tige (22) traversant axialement le tube (12) et manoeuvrable depuis l'extrémité de préhension du manche.

10. Appareil selon 1 et 4, caractérisé par le fait que le moyen de liaison (6) de fixation des deux brins du lien souple (2) est fixée à une tige (25) traversant axialement le manche (9) et débouchant au niveau de l'extrémité (10) de préhension en passant entre deux leviers-cames (26) articulés en (27, 28) sur un bouchon (13) vissé à cette extrémité, ces leviers-cames présentant des dentures orientées (26a) destinées à coincer la tige (25) lorsque les leviers-cames sont au repos et rappelés l'un contre l'autre par un organe élastique (29), et à libérer la tige (25) permettant ainsi aussi ressort de traction (7) d'agir lorsque les leviers-cames sont manoeuvrés simultanément par leur partie levier (26c) opposée aux dentures (26a).

11. Appareil selon 2, caractérisé par le fait que les moyens de liaison du lien souple (34) avec le manche (30), sont constitués par un manchon (37) fixé intérieurement en bout du manche (30) et que traversent une première fois, les deux brins du lien souple (34) pour s'enrouler sur des poulies accolées (38) ou organes équivalents, portées par un coulisseau (40) faisant partie du deuxième mouflage.

12. Appareil selon 2 et 11, caractérisé par le fait que le coulisseau (40) d'enroulement des brins du lien souple (34), est manoeuvré en vue de tirer ledit lien à l'intérieur du manche, en refermant la boucle autour du volume à enserrer, par un dispositif de mouflage comprenant un lien (42) souple ou semi-rigide dont un brin est attaché au coulisseau (40), tandis que l'autre brin est attaché à un fourreau (43) fixé rigidement dans le manche, après que ce lien (42) souple ou semi-rigide ait traversé ledit fourreau et se soit enroulé sur une poulie (45) ou organe similaire, portée par un deuxième coulisseau (46) relié aux moyens de retenue et de libération et soumis à l'action de poussée d'un ressort à boudins (47) comprimé entre ce coulisseau et le fourreau fixe (43).

13. Appareil selon 2, 11 et 12, caractérisé par le fait que le deuxième coulisseau (46) est relié aux moyens de retenue et de libération par une tige rigide (48) traversant une pièce de guidage (49) fixée dans le manche (30) et présentant, à l'avant et à l'arrière, des taquets-coinceurs (53) qui peuvent être basculés alternativement pour retenir ou libérer la tige rigide (48) par un moyen de transmission (56) relié à l'organe de commande situé à l'extrémité du manche.

14. Appareil selon 1 et 13, caractérisé par le fait que le moyen de transmission est une tringle coudée (56) attachée à l'organe de commande et guidée à coulissement dans la pièce de guidage (49); ladite tringle portant en deux points, situés à une distance un peu supérieure à celle des taquets-coinceurs (53), des saillies (56a—56b) destinées à s'appuyer alternativement contre les taquets-coinceurs (53).

15. Appareil selon 13 et 14, caractérisé par le fait que les taquets-coinceurs (53) sont basculés, alternativement et en sens opposés, par des pistons (54) logés à coulissement dans la pièce de guidage (49) et éloignés l'un de l'autre par un ressort d'écartement (55).

16. Appareil selon 2, 11, 12, 13, 14 et 15, caractérisé par le fait que l'organe de commande proprement dit est une poignée (58) solidaire d'un moyeu (57) coulissant dans un manchon creux (59) fixé à l'extrémité du manche, entre deux positions marquées par des crans (57a—57b) coopérant avec une bille à ressort (61) ou moyen équivalent.

17. Appareil selon 2 et 16, caractérisé par le fait qu'une sécurité contre les manipulations inopinées de la poignée (58) est établie sous forme d'une tige (63) attachée au manche indépendamment de la poignée (58) et de son moyeu (57) et dont l'extrémité libre déborde à l'arrière de la poignée en formant un anneau (63a) de liaison avec tous moyens d'attache.

18. Appareil selon 16 et 17, caractérisé par le fait que la poignée (58) présente à l'arrière, un bouchon (62) a lèvre souple, pour s'ajuster autour de la tige de sécurité (63) en refermant le moyeu (57) de la poignée.

19. Appareil selon 4, caractérisé par le fait que la liaison entre le manche (30) et la ceinture (31) est réalisée par un manchon (32) d'adaptation sur le manche (30), qui est solidaire de la ceinture et présente des entailles équerrées (32a) pour s'engager autour de vis (33) placées sur le manche (30) et servant également de moyens de fixation du manchon intérieur (37) d'attache du lien souple (34), et y être retenu, après pivotement du manchon (32), réalisant ainsi une fiscateci à baïonette de la ceinture sur le manche.

20. Appareil selon 1, caractérisé par le fait qu'un organe de transport et de levage de l'appareil est constitué par une poignée (66) montée de manière réglable et amovible sur le manche (30), par deux demi-colliers (66a—66b) articulés d'un côté et serrés sur le manche, par tous moyens tels que boulon à oeil (66c).

21. Appareil selon 3, caractérisé en ce que la ceinture rigide est constituée par un fil de section quelconque, sur lequel est fixé par collage ou autrement, un profilé (36) en matériau souple ou semi-rigide comprenant une partie (36a) d'adaptation sur la ceinture (31) et une cavité ouverte (36b) pour le logement au moins partiel, du lien souple (2, 34).

## Patentansprüche

1. Gerät zum Einschnüren und Fang, insbesondere zum Fang von Großfisch, in der Ausführung mit einem Stiel oder Stab (9, 30) in welchem vom Stiel (9, 30) oder vom Stielgreiferende (10) aus handbetätigte Triebwerke (7 und 15—19 oder 20—23 oder 25—29; 47 und 40—58) zum Einschnüren um den zu greifenden Fisch oder anderen Körper oder Umfang herum einer in der Ruhelage am anderen Stielende entwickelten Schnalle untergebracht sind, die aus einem mit den Triebwerken verbundenen und bei der Betätigung der Triebwerke im Innern des Stiels gezogenen Kabel oder anderen biegsamen Band (2, 34) besteht, dadurch gekennzeichnet, daß die besagte Schnalle des biegsamen Bands (2, 34) an der Innenseite in der Ebene eines kräftigen und steifen Gürtels (1, 31) und an diesen Gürtel abnehmbar gehalten ist, der mit dem besagten anderen Stielenden festgemacht und in einer die Mittellinie des Stiels enthaltenden Ebene und mit einer lichten Abmessung angeordnet wird, die gestattet, diesen Gürtel um den zu greifenden Fisch oder anderen Körper oder Umfang herum einschnürend einzusetzen, wobei die Handbetätigung am Greiferende (10) das Auslösen der innenseitigen Triebwerke bewirkt, die das biegsame Band (2, 34) bei Freimachen der Schnalle von dem sie haltenden Gürtel (1, 31) und Schließung der Schnalle innerlich und in der Ebene der von diesem Gürtel (1) abgegrenzten Oberfläche innerhalb des Stiels (9) ziehen, damit die besagte Schnalle um den zu greifenden Körper oder Umfang herum festgezogen und weiter festgezogen verbleibe, bis sie durch eine unterschiedliche Betätigung freigemacht wird.

2. Gerät nach Anspruch 1, dadurch gekennzeichnet, daß die Verbindungsmittel des biegsamen Bands (34) mit dem Stiel (30) und die Zugmittel des besagten Bands innerhalb des Stiels aus einem zweistufigen Flaschenzug bestehen, und zwar aus einer Flaschenzugvorrichtung der Trumme oder Enden des biegsamen Bands (34) auf einen feststehenden Teil des Stiels (30) nach Aufbringen auf einen beweglichen Teil (40) einer Flaschenzugvorrichtung (40—46) für ein anderes, unter der Zugwirkung eines elastischen Organs (47) stehende Band (42), wobei das elastische Organ von dem am Stielende befindlichen Organ (58) vermittels einer Übersetzung (48) aus gesteuert wird, die mit einer auf die zweite Flaschenzugvorrichtung wirkenden Aufhalt- und Freimachenvorrichtung (52—56) verbunden ist.

3. Gerät nach Anspruch 1, dadurch gekennzeichnet, daß der steife Gürtel (1, 31) eine allgemeine kreisförmige oder vieleckige Formgebung und ein Profil im Hohlquerschnitt mit vorzugsweise einem halbkreisförmigen Boden zur völligen oder teilweisen Aufnahme des biegsamen Bands (2, 34) in der Ebene dieses Bodens aufweist, wobei das biegsame Band mittels elastischer Organe wie Zangen, Clips, Krämpe (4, 36) in dieser Ebene aufgehalten ist.

4. Gerät nach Anspruch 1 und 3, dadurch gekennzeichnet, daß die Verbindungsteile (3) des innenseitigen Profils des Gürtels (1) mit dem Stiel (9) zur Führung der Trümme des biegsamen Bands (2) innerhalb des Stiels ausgestaltet sind, um diese Trümme auf einem Verbindungsmittel (6) mit den Triebwerken zu befestigen, die unter der Wirkung einer Feder (7) dieses Verbindungsmittel innerhalb des Stiels verschieben können.

5. Gerät nach Anspruch 1 und 4, dadurch gekennzeichnet, daß die Feder (7) an deren Ende auf dem Verbindungsmittel (6) und auf einem in dem Stiel (9) befestigten Organ (8) befestigt ist, wobei das besagte Organ (8) als Befestigungsträger für einen Ring, ein Handrad oder ein anderes Hebemittel (11) auch dient, der oder das innerhalb des Stiels angeordnet ist.

6. Gerät nach Anspruch 1 und 4, dadurch gekennzeichnet, daß das Verbindungsmittel (6) in der Einspannstellung durch Klinken (15) aufgehalten ist, die an dem einen Ende auf ein innerhalb des Stiels (9) zwischen einer Abstützungsform (14) für den einzuschnürenden Umfang und einem auf das Greiferende (10) des Stiels (9) verschraubten Dübel (13) feststehend positioniertes Rohr (12) gelenkig montiert sind.

7. Gerät nach Anspruch 1 und 6, dadurch gekennzeichnet, daß das Verbindungsmittel (6) in der Einschnürungslage des erfaßten Umfangs durch Stäbchen (18) aufgehalten wird, die mit mehreren orientierten Einkerbungen (18a) versehen und in dem Rohr (12) untergebracht sind, und zwar in der Weise, daß diese Stäbchen in dem besagten Rohr zurückgeklappt werden können oder aus dem Rohr hervorragen können.

8. Gerät nach Anspruch 6 und 7, dadurch gekennzeichnet, daß die Klinken (15) und die Stäbchen (18) durch elastische, mit einer entlang und innerhalb des Rohrs (12) beweglichen Achsialstange (16) verbundene Kurbelstangen (19) gesteuert werden, die in der Höhe des Greiferteils (10) des Stiels einen Bedienungsgriff (16a) aufweisen, der entweder das Zurückklappen der Klinken (15) bei Freimachen des beweglichen Kopfes (6) und das Herausragen der Stäbchen (18) bei Verhinderung der Rückbewegung des Kopfes (6) nach Einschnürung des Umfangs, oder umgekehrt das Herausragen der Klinken (15) und das Zurückklappen der Stäbchen (18) gleichzeitig durch Verschieben in längsseitiger Richtung bewirkt.

9. Gerät nach Anspruch 6 und 7, dadurch gekennzeichnet, daß die in dem Rohr (12) frei untergebrachten Klinken (20) und eingekerbte Stäbchen (21) durch die torischen Schraubfedern (23) zwischen einander verbunden und in ihrer umgekehrten Radialverschiebung (Zurückklappen in dem Rohr und Herausragen aus dem Rohr) durch umgekehrte Kegelunterlagen (22a, 22b) gesteuert werden, die auf einer das Rohr (12) achsial durchsetzenden und vom Greiferende des Stiels aus betätigbaren Stange (22) gebildet sind.

10. Gerät nach Anspruch 1 und 4, dadurch gekennzeichnet, daß das Verbindungsmittel (6) zur Befestigung der zwei Trümme des biegsamen Bands (2) auf einer den Stiel (9) achsial durchzusetzenden und in der Höhe des Greiferendes (10) mündenden Stange (25) befestigt ist, die zwischen zwei bei (27, 28) auf einem auf diesem Greiferende verschraubten Dübel (13) gelenkig montierten Nocken-Hebeln (26) geführt wird, die orientierte Verzahnungen (26a) aufweisen, wobei diese Verzahnungen für das Verkeilen der Stange (25) bei Stillstand und Rückführung durch ein elastisches Organ (29) der Nocken-Hebel gegeneinander sowie für das Freimachen der genannten Stange (25) vorgesehen sind, indem diese Verzahnungen der Zugfeder (7) auch gestatten, bei gleichzeitiger Betätigung der Nocken-Hebel durch ihren den Verzahnungen (26a) entgegengesetzten Hebelteil (26c) wirksam zu werden.

11. Gerät nach Anspruch 2, dadurch gekennzeichnet, daß die Mittel zur Befestigung und Verbindung des biegsamen Bands (34) mit dem Stiel (30) aus einer am Ende des Stiels (30) innenseitig befestigten Hülse (37) bestehen, wobei die zweite Trümme des biegsamen Bands (34) zum Aufwickeln auf aneinandergestellte, von einem der zweiten Flaschenzugvorrichtung gehörenden Stößel (40) getragene Scheiben oder gleichartige Organe (38) diese Hülse ein erstes Mal durchsetzen.

12. Gerät nach Anspruch 2 und 11, dadurch gekennzeichnet, daß der Stößel (40) für das Aufwickeln der Trümme des biegsamen Bands (34) zum Ziehen des besagten Bands innerhalb des Stiels bei Zuschließen der Schnalle um den einzuschnürenden Umfang herum durch eine Flaschenzugvorrichtung betätigt wird, die ein biegsames oder halbsteifes Band (42) aufweist, dessen ein Trumm an den Stößel (40) angebunden ist, während der andere Trumm an eine steif in dem Stiel befestigte Schneide (43) angebunden wird, wobei die Betätigung nach Durchsetzen der besagten Scheide durch dieses biegsame oder halbsteife Band (42) und Aufwickeln desselben auf eine Scheibe oder desgleichen (45) erfolgt, die von einem zweiten, mit den Aufhalt- und Freimachenmitteln verbundenen Stößel (46) getragen ist, der durch die Schubwirkung einer zwischen diesem zweiten Stößel und der ortsfesten Scheide (43) zusammengedrückten Schraubenfeder (47) beansprucht wird.

13. Gerät nach Anspruch 2, 11 und 12, dadurch gekennzeichnet, daß der zweite Stößel (46) mit den Aufhalt- und Freimachenmitteln durch eine, ein in dem Stiel (30) befestigtes Führungsstück (49) durchsetzende steife Stange (48) verbunden wird, die am Vorder- und Hinterteil die Verkeilungszapfen (53) aufweist, die zum Aufhalten oder Freimachen der steifen Stange (48) durch ein mit dem am Ende des Stiels befindlichen Steuerorgan verbundenes Übertragungsmittel (56) wechselweise verschwenkt werden können.

14. Gerät nach Anspruch 1 und 13, dadurch gekennzeichnet, daß das Übertragungsmittel aus einer gebogenen Stange (56) besteht, die an das Steuerorgan angebunden und in dem Führungsstück (49) verschiebbar geführt ist, wobei die besagte Stange auf zwei, auf einer etwa größeren Entfernung als die der Verkeilungszapfen (53) befindlichen Stellen, die zur wechselweisen Abstützung an die Verkeilungszapfen (53) vorgesehenen Vorsprünge (56a—56b) aufweist.

15. Gerät nach Anspruch 13 und 14, dadurch gekennzeichnet, daß die Verkeilungszapfen (53) wechselweise und in entgegengesetzter Richtung durch Kolben (54) verschwenkt werden, die verschiebbar in dem Führungsstück (49) untergebracht und durch eine Abstandfeder (55) auseinander entfernt sind.

16. Gerät nach Anspruch 2, 11, 12, 13, 14 und 15, dadurch gekennzeichnet, daß das eigentliche Steuerorgan aus einem mit einer Nabe (57) festgemachten Griff (58) besteht, wobei die Nabe in einer am Ende des Stiels befestigten Hohlmuffe (59) zwischen zwei durch mit einer Federkugel oder einem gleichartigen Mittel (61) mitwirkenden Einkerbungen (57a—57b) gezeichneten Stellungen verschiebbar angeordnet ist.

17. Gerät nach Anspruch 2 und 16, dadurch gekennzeichnet, daß eine Sicherheit gegen unerlaubte Handhabungen des Griffs (58) in der Form einer an den Stiel unabhängig von dem Griff (58) und dessen Nabe (57) gebundenen Stange (63) vorgesehen ist, deren freies Ende zur Bildung eines Verbindungsrings (63a) mit beliebigen Befestigungsmitteln am Hinterteil des Griffs herausragt.

18. Gerät nach Anspruch 16 und 17, dadurch gekennzeichnet, daß der Griff (58) am Hinterende einen Dübel (62) mit biegsamer Lippe aufweist, der zum Anpassen um die Sicherheitsstange (63) herum bei Zuschließen der Nabe (57) des Gürtels vorgesehen ist.

19. Gerät nach Anspruch 6, dadurch gekennzeichnet, daß die Verbindung zwischen dem Stiel (30) und dem Gürtel (31) mittels einer mit dem Gürtel festgemachten Muffe (32) zum Anpassen auf den Stiel (30) durchgeführt wird, wobei die Muffe quadratische Einschnitte (32a) zum Eingreifen um die auf dem Stiel (30) befindlichen Schrauben (33) herum aufweist, die auch als Befestigungsmittel für die innenseitige Bindungshülse (37) des biegsamen Bands (34) dienen, und zwar bei Aufhalten der besagten Muffe (32) nach Verschwenken derselben, womit eine Bajonettbefestigung des Gürtels auf dem Stiel ausgeführt wird.

20. Gerät nach Anspruch 1, dadurch gekennzeichnet, daß eine Vorrichtung zum Transportieren und Anheben des Geräts aus einem Griff (66) besteht, der in einstellbarer und abnehmbarer Weise mittels zwei Halbschellen (66a—66b) auf dem Stiel (30) montiert ist, wobei die Halbschellen an einer Seite durch beliebige Mittel wie Ösenbolzen (66c) auf den Stiel gelenkig angezogen werden.

21. Gerät nach Anspruch 3, dadurch gekennzeichnet, daß der steife Gürtel aus einem Draht beliebigen Querschnitts besteht, auf welchem ein Profilierstück (36) aus biegsamen oder halbsteifem Werkstoff durch Aufkleben oder desgleichen befestigt ist und einen Teil (36a) zum Anpassen auf den Gürtel (31) sowie eine geöffnete Vertiefung (36b) zum am wenigstens teilweisen Unterbringen des biegsamen Bands (2, 34) aufweist.

## Claims

1. Apparatus for clamping in, for capturing, more particularly for fishing heavy fish, of the type including a handle or pole (9, 30) in which mechanisms (7 and 15—19 or 20—23 or 25—29; 47 and 40—58) are housed and controlled manually from the handle (9, 30) or from the gripping end (10) of the handle, in order to tighten around the fish or other body or volume to bei gripped a loop which is developed at rest at the other end of the handle, said loop being formed by a cable or other flexible tie (2, 34) connected to the control mechanisms and pulled inside the handle when these mechanisms are triggered; the apparatus being characterized in that said loop or flexible tie (2, 34) is maintained in a removable manner at the inner side within the plane of and against a strong and rigid belt (1, 31) integral with said other end of the handle and disposed within a plane containing the center line of the handle, the inside dimension of said belt permitting it to be engaged around the fish or other body or volume to be gripped, the manual actuation at the gripping end (10) causing the inside mechanisms to be triggered and to pull the flexible tie (2, 34) inside the handle (9), releasing the loop from the belt (1, 31) which maintans the loop and closing the latter inside and within the plane of the surface delimited by this belt (1), said loop being tightened and held tightly around the body or volume to be gripped until said body or volume will be made free by a different actuation of the control.

2. Apparatus as claimed in claim 1, characterized in that the connection means of the flexible tie (34) with the handle (30) and the means for pulling said tie within the interior of the handle consist of a twolevel reeving, i.e. a device for reeving the strands or ends of the flexible tie (34) onto a fixed portion of the handle (30) after having been pased over a mobile element (40) forming a part of a reeving device (40—46) for another tie (42) subjected to the tractive action of a elastic organ (47), controlled from the organ (58) situated at the end of the handle through the intermediary of a transmission (48) connected to a retaining and releasing device (52—56) acting upon the second reeving.

3. Apparatus as claimed in claim 1, characterized in that the rigid belt (1, 31) has a general circular or polygonal shape and a hollow sectional contour, preferably with a half-circular bottom for receiving within the plane thereof and entirely or in part the flexible tie (2, 34) which is retained therein by elastic organs such as clamps, clips, dogs (4, 36).

4. Apparatus as claimed in claim 1 and 3, characterized in that the connecting portions (3) of the internal contour of the belt (1) with the handle (9) are configured for guiding the strands of the flexible tie (2) within the interior of the handle in order to secure them onto a connecting means (6) with the control mechanisms which are designed to shift under the action of a spring (7) this connecting means within the interior of the handle.

5. Apparatus as claimed in claim 1 and 4, characterized in that the spring (7) is secured at the ends thereof onto the connecting means (6) and an organ (8) fastened within the handle (9), said organ (8) serving also as a fastening support for a ring, handwheel or other lifting means (11) disposed within the interior of the handle.

6. Apparatus as claimed in claim 1 and 4, characterized in that the connecting means (6) is retained in the cocked position by pawls (15) linked hingedly at one end on a tube (12) positioned fixedly within the interior of the handle (9) between an abutment shaping (14) for the volume to be clamped in and a plug (13) engaged threadedly with the gripping end (10) of the handle (9).

7. Apparatus as claimed in claim 1 and 6, characterized in that the connecting means (6) is retained in the position for clamping in the gripped volume by small bars (18) probided with a plurality of oriented notches (18a) which are housed within the tube (12) in such a mannet that they will be collapsed within said tube or that they will project radially therefrom.

8. Apparatus as claimed in claim 6 and 7, characterized in that the pawls (15) and the small bars (18) are controlled by elastic links (19) connected to an axial rod (16) movable along and within the tube (12) and having at the level of the gripping portion (10) of the handle an operational grasp (16a) designed for providing at the same time, by lengthwise shifting, either the collapsing of the pawls (15) releasing the mobile head (6) and the projection of the small bars (18) preventing the backward return of the head (6) after the volume has been clamped in, or conversely the projection of the pawls (15) and the collapsing of the small bars (18).

9. Apparatus as claimed in claim 6 and 7, characterized in that the pawls (20) and the notched small bars (21) housed freely within the tube (12) are interconnected by toroidal spiral springs (23) and controlled in their reverse radial shifting (collapsing within the tube and projection out of the tube) by reverse tapered bearing faces (22a, 22b) formed on a rod (22) passed axially through the tube (12) and actuated from the gripping end of the handle.

10. Apparatus as claimed in claim 1 and 4, characterized in that the connecting and fastening means (6) for the two strands of the flexible tie (2) is secured to a rod (25) passed axially through the handle (9) and emerging at the level of the gripping end (10) while being passed between two cam-levers (26) fulcrumed at (27, 28) on a plug (13) screw-threaded at this end, these cam-levers having oriented teeth (26a) for keying up the rod (25) when the cam-levers are at rest and returned against one another by an elastic organ (29), and for releasing the rod (25) in order to permit thereby the tractive spring (7) to act when the cam-levers are actuated simultaneously by their lever portion (26c) opposite the teeth (26a).

11. Apparatus as claimed in claim 2, characterized in that the means for connecting the flexible tie (34) with the handle (30) consist of a sleeve (37) fixed internally at the end of the handle (30), the two strands of the flexible tie (34) crossing a first time these menas to be wound around pulleys joined side by side or equivalent organs (38) supported by a slide-block (40) forming a part of the second reeving.

12. Apparatus as claimed in claim 2 and 11, characterized in that the slide-block (40) for winding the strands of the flexible tie (34) is actuated for pulling said tie within the interior of the handle, while closing in the loop around the volume to be clamped in, by a reeving device including a flexible or half-rigid tie (42) a strand of which is attached to the slide-block (40), while the other strand is attached to a sheath (43) fixed rigidly within the handle after this flexible or semi-rigid tie (42) has been passed through said sheath and wound around a pulley (45) or similar organ, supported by a second slide-block (46) connected to the retaining and releasing means and subjected to the urging action of a coil spring (47) compressed between this second slide-block and the fixed sheath (43).

13. Apparatus as claimed in claim 2, 11 and 12, characterized in that the second slide-block (46) is connected to the retaining and releasing means by a rigid rod (48) passed through a duiding piece (49) secured within the handle (30) and provided forwardly and rearwardly with wedging-cleats (53) which can be tipped alternately for retaining or releasing the rigied rod (48) by a transmission means (56) connected to the control organ located at the end of the handle.

14. Apparatus as claimed in claim 1 and 13, characterized in that the transmission means is a bent rod (56) attached to the control organ and guided slidably within the guiding piece (49), said bent rod supporting at two points situated with a spacing somewhat higher than the spacing of the wedging-cleats (53) the projections (56a—56b) which are intended for abutting alternately against the wedging-cleats (53).

15. Apparatus as claimed in claim 13 and 14, characterized in that the wedging-cleats (53) are tipped alternately and in opposite directions by the pistons (54) housed slidably within the guiding piece (49) and held apart from one another by means of a spacer spring (55).

16. Apparatus as claimed in claim 2, 11, 12, 13, 14 and 15, characterized in that the control organ proper is a grasp (58) integral with a boss (57) sliding within a hollow sleeve (59) secured at the end of the handle, between two positions marked by notches (57a—57b) co-operating with a spring ball or equivalent means (61).

17. Apparatus as claimed in claim 2 and 16, characterized in that a safety against unexpected actuations of the grasp (58) is provided in the form of a rod (63) attached to the handle independently from the grasp (58) and the boss (57) thereof, the free end of this rod protruding rearwardly from the grasp while forming a ring (63a) for connection with any fastening means.

18. Apparatus as claimed in claim 16 and 17, characterized in that the graps (58) is provided rearwardly with a plug (62) with flexible lip for fitting around the safety rod (63) by closing in the boss (57) of the grasp.

19. Apparatus as claimed in claim 4, characterized in that the connection between the handle (30) and the belt (31) is provided by an adaptor sleeve (32) on the handle (30), said sleeve being integral with the belt and having squared notches (32a) for engagement around screws (33) placed on the handle (30) and serving also as means for fastening the inner sleeve (37) securing the flexible tie (34) and for being retained therein after the sleeve (32) has been pivoted, providing thereby a bayonet fastening of the belt on the handle.

20. Apparatus as claimed in claim 1, characterized in that a carrying and lifting organ of the apparatus consists of a grasp (66) mounted in an adjustable and removable manner on the handle (30) by two half-collars (66a—66b) linked hingedly on one side and clamped to the handle by any suitable means such as an eyebolt (66c).

21. Apparatus as claimed in claim 3, characterized in that the rigid belt consists of a wire of any section, on which is secured by bonding or otherwise a contoured part (36) of flexible or half rigid material comprising a portion (36a) for adaptation on the belt (31) and an open cavity (36b) for housing, at least in part, the flexible tie (2, 34).

0 059 676

FIG.1

FIG.2

FIG.3

FIG.4

FIG.5

0 059 676

FIG.8

FIG.6

FIG.7

FIG.9

FIG.10

FIG.11

FIG.12

FIG.13

17

0 059 676

FIG.16

FIG.15

FIG.14

FIG.17

FIG.18

FIG.19

FIG.20

FIG.21

FIG.22

FIG.23

FIG.24